# EUROPEAN PATENT APPLICATION

(11) **EP 3 512 062 A1**
(43) Date of publication of application: **17.07.2019**
(21) Application number: 18151200.5
(22) Date of filing: 11.01.2018
(51) Int. Cl.: H02J 3/38, F03D 9/34, F03D 9/25

(54) **AN OFFSHORE WIND FARM AND SUBSTATION**

(71) Applicant: Ørsted Wind Power A/S, 7000 Fredericia (DK)
(72) Inventor: HOSPERS, Alexander, 4100 Ringsted (DK)
(74) Representative: AWA Denmark A/S

(57) **Abstract**

An offshore wind farm (1) comprising a number of wind turbine generator arrays (5). Each wind turbine generator array (5) comprises an array transformer (6) and a number of wind turbine generators (6) connected, in use, electrically to the array transformer (8). The array transformer (8) is associated with one wind turbine generator (6) among said number of wind turbine generators (6) and each array transformer (8) is, in use, electrically connected a bus bar (17) on the offshore substation (4). The bus bar (17) on the offshore substation is, in use, connected electrically to an export cable (3).

## Description

The present invention relates to grid connection of offshore wind turbines and the associated substations in the electrical power transmission, in particular offshore substations connected to offshore wind farms.

When offshore windfarms have to deliver the wind power produced to the grid, a commonly used configuration is to connect the wind turbines to the grid via an offshore substation, one or more export cables and an onshore substation.

As windfarms get bigger and bigger, the offshore substations increase accordingly, as they grow with the power handling capacity, in turn increasing the size and weight of the necessary transformers and switchgear. This in turn increases the size and weight of the necessary platform or structure to carry the increased weight and volume. This in turn increases costs for the platform and the foundation thereof, which is not desirable.

In this respect the document EP2863053, proposes a configuration not needing an offshore substation at all. More specifically, EP2863053 suggests one transformer at each array of wind turbines, connected directly to the export cable to the onshore substation. Multiple long transmission lines to shore however might not be feasible for economical reasons. This is in particular the case when export cables are long, e.g. in excess of 100 km. In particular, a single line (or for redundancy possibly two or more parallel lines) should be used, but preferably as few as possible. This, in turn, necessitates HV export cables.

Also the document WO2008/039121 suggests a configuration not needing an offshore substation at all. Instead one step-up transformer is arranged at each array of wind turbines. Each of these step-up transformers are connected to a main cable in common, which WO2008/039121 recognizes will for a certain power level generated by the wind farm, comprise multiple MV export cables if the step-up transformers are not HV.

These prior art documents focus mainly on the omission of the offshore substation, but fails to deal much with the practical implications of omitting the offshore substation.

The inventors of the present invention, on the other hand, have realized that even if the above prior art seems to make it attractive to omit the offshore substation, advantages can instead be gained over prior art substations by maintaining but modifying the entire system including the offshore substation.

According to a first aspect of the invention, this object is achieved by an offshore wind farm comprising a number of wind turbine generator arrays, each wind turbine generator array comprising an array transformer and a number of wind turbine generators connected, in use, electrically to the array transformer, where the array transformer is associated with one wind turbine generator among said number of wind turbine generators, where each array transformer is, in use, electrically connected to a bus bar on the offshore substation, and where the bus bar on the offshore substation is, in use, connected electrically to at least one export cable.

With such an arrangement, the main transformers on a traditional offshore substation may be removed from the offshore substation, thereby substantially reducing the weight of the equipment installed on the station, while at the same time avoiding the far offshore drawbacks associated with the above-mentioned prior art solutions. Furthermore, the offshore handling of the transformers is simplified because of the reduced weight to be handled during installation. Reducing the weight of the equipment, in turn, also reduces the necessary load bearing capacity of the foundation, which may then also be reduced. Here too, a foundation with a smaller load bearing capacity is smaller and therefore easier handled during establishment.

According to a first preferred embodiment of the first aspect of the invention, the offshore substation comprises at least one shunt reactor for compensation of the at least one export cable, and where the at least one shunt reactor is adapted for supplying electrical power for operating the offshore substation. Since the invention renders itself most suitable for far offshore establishment, it will normally be necessary with reactive power compensation for the long export cables. Shunt reactors for the reactive power compensation should preferably, but not necessarily, be provided at both ends of the export cable, and it has been realized by the inventors that drawing the supply power for operation of the offshore substation from e.g. a tertiary winding on the shunt reactors is a simple, economically advantageous way of doing so.

Accordingly, there is in a second aspect of the invention provided an offshore substation for a wind farm comprising at least one shunt reactor for compensation of at least one export cable. This allows the shunt reactor to be used for secondary purposes, and therefore, according to a specifically preferred embodiment, the at least one shunt reactor is adapted for supplying electrical power for operating the offshore substation.

According to a further preferred embodiment according to the first aspect of the invention, the wind turbine array comprises an earthing reactor or an earthing transformer. Providing an earthing reactor or an earthing transformer controls the star-point voltage and limits the level of short circuit currents by use of an earthing resistor (or an earthing impedance), which limits fault voltages and currents that could otherwise potentially damage equipment in the systems.

According to a further preferred embodiment the earthing reactor or earthing transformer is combined with the array transformer. This is convenient for the establishment thereof.

According to yet another preferred embodiment, wherein the earthing reactor is designed and rated to wholly or partially compensate the array cable. In this way a long transmission distance may be achieved

Preferably, according to another preferred embodiment according to the first aspect of the invention, the earthing reactor or the earthing transformer is placed on one of said wind turbine generators. This for one, means that it can easily be mounted in close vicinity of the array transformer.

It may then also share an outside platform with the array transformer when, according to a further preferred embodiment according to the first aspect of the invention, the array transformer is arranged on a platform or support structure mounted on said wind turbine generator, preferably on the outside thereof. This, in turn, is not only advantageous in installation, but also in terms of cooling and dissipation of waste heat.

According to a further embodiment of the invention, the offshore substation comprises a superstructure and a substructure, wherein the substructure comprises a jacket or a monopile, i.e. a substructure like those used for wind turbine generators. The establishment of such a substructure is substantially easier and more economically feasible than substructures of prior art substations. Moreover, using substructures similar to or largely identical to those used for the wind turbine generators themselves facilitates installation as the same equipment may be used.

According to a further embodiment of the invention, the substructure comprises a three-leg jacket.

The invention will now be described in greater detail based on nonlimiting exemplary embodiments and with reference to the drawings on which:
Fig. 1 shows a schematic representation of a far offshore wind farm according to the invention connected through an onshore substation to the grid,
Fig. 2 shows a different representation of the far offshore wind farm connected to the onshore substation,

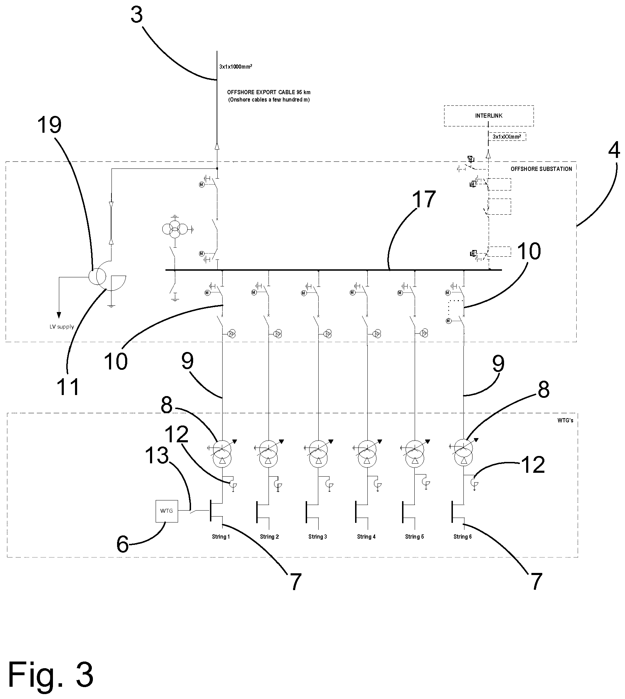

Fig. 3 shows an electrical diagram of an offshore wind farm according to the invention,
Fig. 4 shows an array transformer on a platform according to the invention on a wind turbine generator,
Figs. 5 and 6 show side and front views of the superstructure and parts of the substructure of an offshore substation according to the invention, and
Figs. 7 and 8 show different substructures of an offshore substation according to the invention.

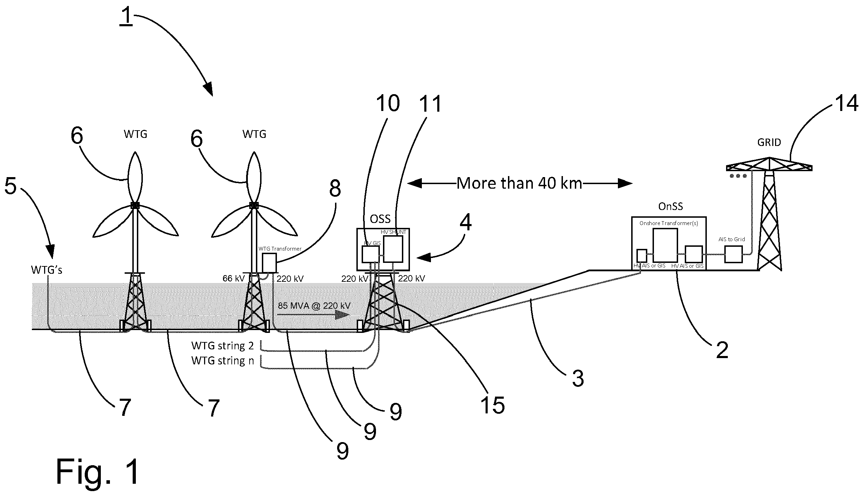

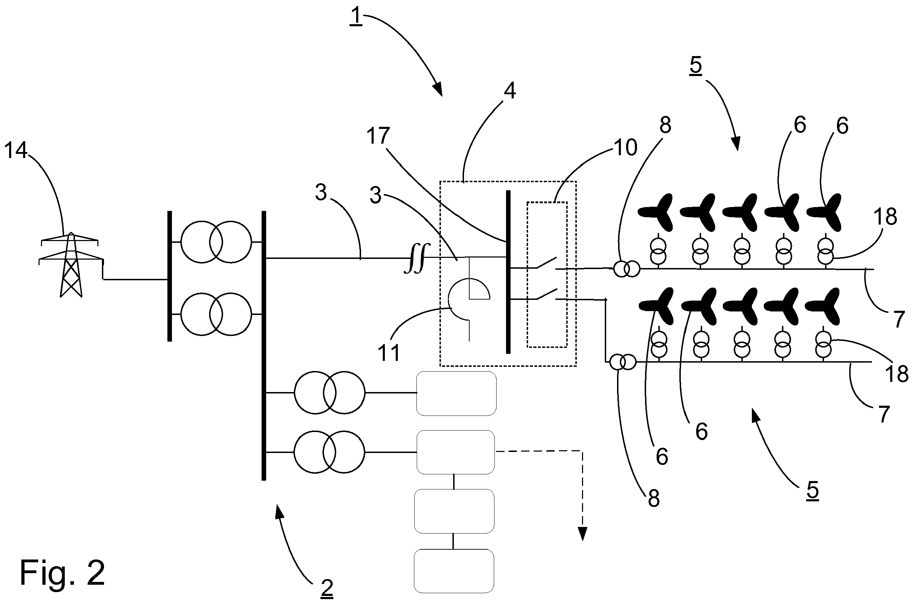

Turning first to Fig. 1, an offshore wind farm 1 according to the invention is shown. For the following description and the examples mentioned therein, the power capacity of the windfarm is assumed to be 400 MW. The principles of the present invention and the idea behind is however not limited to that rated power, and will in particular also be applicable to higher rated wind farms, such as 700 MW or even above 1 GW. The offshore wind farm 1 is connected to an onshore substation 2 via an export cable 3. The onshore substation 2 is, in turn, connected to the common electricity grid 14 schematically represented by a pylon. The export cable is in this example an AC cable. The wind farm 1 comprises an offshore substation 4 and both the wind farm 1 and the offshore substation 4 are far offshore in this context meaning that the export cable is so long, e.g. exceeding 40 km, that reactive compensation of the AC cable is necessary. A number of wind turbine generator arrays 5 are connected to the offshore substation 4. Each wind turbine generator array 5 comprises a number of wind turbines 6. Typically, the wind turbine generators 6 in an array 5 are all connected to the offshore substation 4 by one single cable 7, i.e. on a string, but other configurations will of course be possible. With the wind turbine generators 6 on a string, the power carrying capacity of the cable 7 normally sets the limitation on how many wind turbines can be connected in one array 5. In the currently used configurations, the rated voltage of the cable 7 is typically 33 kV or 66 kV, and the outset of the present invention is 66 kV. Since the actual electrical generators of wind turbine generators often are designed as low voltage generators, the wind turbine generators 6 may comprise their own step-up transformers 18 to match the rated voltage of the cable 7 as illustrated in Fig. 2. For the purposes of this description voltages from 33 kV to 66 kV will be referred to as medium voltage, abbreviated MV. Higher voltages will normally be referred to as high voltage, abbreviated HV.

In conventional wind farms the medium voltage array cable is normally continued to the offshore substation where it is stepped up to high voltage such as 132 or higher. For the present 400 MW example, that would typically involve two heavy 230 MVA step-up transformers. According to the invention, however, the array transformer 8 is placed on one of the wind turbine generators 6 in the array 5, preferably the one closest to the offshore substation 4. If the wind turbine generators are arranged on a string, the array transformer 8 is preferably on the last wind turbine generator 6 on the string, closest to the offshore substation 4. The above string topology is, however, not the only possible topology. E.g. the array transformer 8 may instead be common to a number of arrays or sub-arrays. One example is if the array transformer 8 is placed in the middle of a string, in which case the two parts of the string constitute sub-arrays. The inventors have realized that with the power capacity of the array already limited by the available MV cable 7, the weight of the corresponding step up transformer can be carried by the wind turbine generators 6 and their foundations. Thus the connection from the wind turbine array 5 to the offshore substation 4 is provided as a high voltage cable 9. This means that the high voltage step-up transformers and their weight can be removed from the offshore substation 4, as indicated in Fig. 1 by only showing the switchgear 10 and the high voltage shunt reactor 11 on the offshore substation 4. The high voltage step-up transformers constitute by far the heaviest equipment on the platform. MV cable 7 compensation with reactors is assumed not to be necessary and will be provided by the wind turbine generator converters if necessary.

Having removed the high voltage transformers, and with them the medium voltage switchgears, what remains on the substation is essentially the high voltage gas insulated switchgear (HV GIS) 10, the high voltage shunt reactor 11, SCADA and a reduced amount of low voltage and utility equipment. This reduces the load carrying requirements for the platform itself as well as its foundation. Typically, the remaining equipment makes up only about 15 percent of the equipment weight on the platform, whereas the transmission assets, i.e. the high voltage transformers and the high voltage gas insulated switchgear, accounts for the remainder. The remaining 85 percent would typically be distributed as follows. 60% of that weight is related to the two step-up transformers. Another 20 % is reserved for the shunt reactors and the remaining 20% is for the MV GIS; HV GIS and auxiliary/earthing transformers. The weight reduction is thus substantial. For the 400 MW example with two 230 MVA step-up transformers, the weight removed would be approximately 670 tonnes.

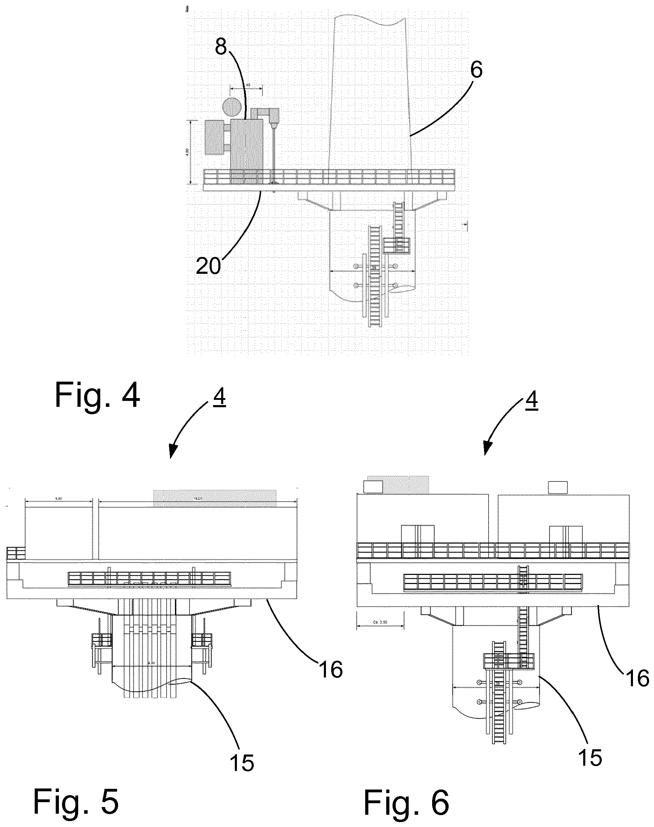

Instead, the large high voltage transformers are now split into multiple smaller array transformers 8, able to transform the power from one string, typically a maximum of 85 MVA at 66 kV or 45 MVA at 33 kV, to the required high voltage level, typically 155 kV, 220 kV, 275 kV or other high voltages. Instead five 80 MVA transformers are placed, one in each array 5, normally on the last wind turbine generator 6, which normally is feeding the power towards the offshore substation 4. A platform or support structure 20 will of course have to be added to the wind turbine generator foundation to support this transformer 8 as illustrated in Fig. 4. Normally, the platform would already be present, but typically a platform larger than normal platform would be needed. In any case, the foundation will easily be able to support such a platform and the weight of the smaller step-up transformer 8. If the array transformer 8 is an outdoor transformer, the weight is expected to be around 100 tonnes. The support for this transformer can be calculated using a steel/equipment ratio of 33/67, resulting in a steel weight of only ca. 35 tonnes to be added to the wind turbine foundation. If the dimensions of the transformer allow for it, the transformer could also be placed in the wind turbine tower, inside, taking the cooler only to the outside. It may also be envisaged to place the transformer 8 in the foundation of the wind turbine generator or in the transition section between the foundation and the wind turbine tower, be it on a dedicated platform or not.

These smaller array transformers 8 are connected to bus bar 17 via the HV GIS switchgear 10 on the platform of the offshore substation 4. However, with the higher voltage already available from the array 5, the 66 kV array cable which would have been connected to the offshore substation 4 is replaced by a high voltage cable. So, instead of a 500 mm² 66 kV medium voltage cable, as used in this example, only a much smaller HV cable, e.g. in the conductor cross-section area interval of 120 to 400 mm² is needed for connecting to the offshore substation 4. The cable conductor cross section needed to transmit a certain level of power depends on the system voltage. Hence, for other cable voltages other cable dimensions will apply.

Furthermore, by removing the main step-up transformers from the offshore substation 4 and placing instead smaller array transformers 8 on the wind turbine generator foundations, the medium voltage gas insulated switchgear MV GIS on the offshore substation 4 can also be omitted. The incoming HV Cable from the last WTG now directly connects to the HV GIS on the offshore substation. Also, a MV GIS may not be required on the medium voltage side of the array transformer 8 placed on the last wind turbine generator 6, assuming the same protection philosophy as in the current designs is applied.

Instead, however, in the new setup, the HV GIS consists of six incoming array bays, assuming that six strings 9 are connected, one export cable outgoing switchgear and a disconnector arrangement to the high voltage shunt reactor 11, resulting in a total of 8 HV GIS bays. In the conventional setup the HV GIS would have two main transformer incomers, one export cable outgoing switchgear and a disconnector arrangement to the high voltage shunt reactor.

In a conventional configuration, the high voltage shunt reactor compensates as a rule of thumb ca. 40% of the export cable capacity on the offshore substation. The MVAr generated (or consumed) shall normally be compensated at the place of occurrence.

For the present example, it is assumed that the offshore substation 4 will have a 140 MVAr shunt reactor 11 as in the conventional setup. In some cases, however, there might be possibilities to decrease the shunt reactor's capacity 11 to an absolute minimum, still compensating and preventing issues such as "zero miss phenomenon" to occur, and obeying cable compensation requirements and imposed limits on how much MVAr may flow. The skilled person will understand that if the present invention, though conceived for far offshore windfarms 1, is used for near shore installations the shunt reactor 11 might be omitted completely.

With a now much smaller offshore substation 4, the need for low voltage power is significantly reduced. Low voltage loads are expected to be less than 120 kVA.

At the same time, as there is no MV GIS collector bus on the offshore substation 4, so the need for the earthing part on the offshore substation 4 is also removed.

The reduced need for power has led to the realisation by the inventors that the low voltage power needed for the offshore substation 4 can be provided by using a tertiary winding 19 on the available shunt reactor. It can even be envisaged to use so called Power Voltage Transformers to supply power to the offshore substation 4.

The reduced low voltage power requirements for the offshore substation 4, in turn, leads to further advantages and weight saving, e.g. that low voltage systems can be minimized to only use 230 VAC and 230 VAC UPS systems or corresponding systems such as 110 VAC and 110 VAC UPS. All such low voltage systems can be placed in one single 40' container.

Furthermore, there will be no need for an emergency Diesel generator, because with low voltage supply minimized to the absolute minimum, emergency operation can be limited to the use of battery systems.

In terms of emergency, it should be noted that fire hazard is highly decreased, as with the removal of the main transformers from the offshore the oil they contain is also removed. The high voltage shunt reactor 11 may contain ester oil not posing a fire hazard. Depending on regulatory requirements it may also be possible that, without oil containing components the need for oil sump, oil separators etc. is avoided, in turn leading to further weight reduction.

Earthing of the 66 kV in the string shall be provided by using a 66 kV earthing reactor 12 or alternatively an earthing transformer, which may be combined with the array transformer 8 as mentioned above. Placement of this reactor can be on the last wind turbine generator but is not necessarily and can be placed in/on any wind turbine generator in the string. In particular the the earthing reactor 12 (or earthing resistor) may be connected to a star point of the MV side of the array transformer 8.

The transformer protection and control is normally located on the transformer platform. Protection of the now high voltage array transformers 8 remains necessary and is still located on the offshore substation 4 close to the HV GIS 10.

In case of a fault in the high voltage array 9 or array transformer 8, the HV GIS breaker has to be opened. On the 66 kV side, the already existing under voltage protection in the wind turbine generator 6 will open the wind turbine generator infeed 13 to the string. Also the Buchholz relay for the array transformer 8 will result in an opening of the HV GIS breaker as well as the 66 kV wind turbine generator breaker systems.

To put the above advantages into perspective, typical weight values for the 400 MW example would compare as follows: Conventional, comprising transformers, MV GIS, HV GIS, HV shunt, earthing/aux transformers, LV & utilities, SCADA & telecom, mechanical and other systems would give a resulting equipment weight of approximately 1240 tonnes, whereas an offshore substation 4 according to the invention, comprising HV GIS, HV shunt, earthing/aux transformers, LV & utilities, SCADA & telecom, mechanical and other systems would result in only approximately 440 tonnes. Because of the reduced weight to be carried, the supporting construction may be made lighter, and the weight of the civil engineered parts including substation steel would fall from approximately 1460 tonnes to approximately 440 tonnes.

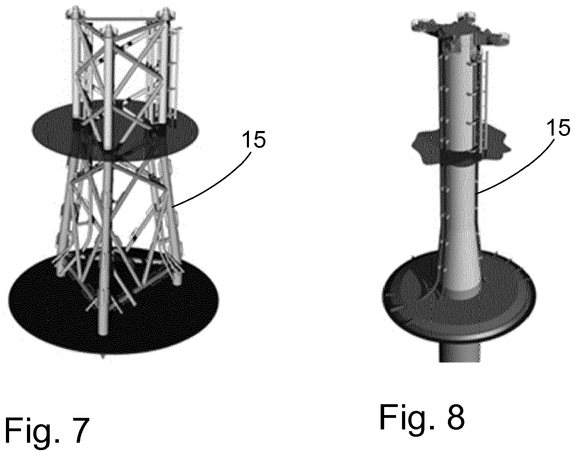

With the reduced weight of the superstructure 16 of the offshore substation 4 as illustrated in Figs. 5 and 6, the substructure 15 of the offshore substation 4 can be much smaller and be configured as a 3-4 leg jacket as the one illustrated in Fig. 7, with or without suction buckets, or even as a monopile as the one illustrated in Fig. 8. Essentially, as can be seen by comparison between Figs. 4 and 6, the substructure of the offshore substation 4 may be more or less identical to that of an off shore wind turbine 6. The substructures are however not limited to the above examples, but any other substructure could in principle be used, be it floating, bottom fixed, gravity based, etc. In any case, the costs of the substructure 15 and the establishing thereof may be reduced significantly.

## Claims

1. An offshore wind farm comprising a number of wind turbine generator arrays,
each wind turbine generator array comprising an array transformer and a number of wind turbine generators connected, in use, electrically to the array transformer, where
the array transformer is associated with one wind turbine generator among said number of wind turbine generators, where
each array transformer is, in use, electrically connected to a bus bar on the offshore substation, and
where the bus bar on the offshore substation is, in use, connected electrically to at least one export cable.

2. An offshore wind farm according to claim 1, wherein the offshore substation comprises at least one shunt reactor for compensation of the at least one export cable.

3. An offshore wind farm according to claim 2, wherein the at least one shunt reactor is adapted for supplying electrical power for operating the offshore substation.

4. An offshore wind farm according to any one of the preceding claims, wherein the wind turbine array comprises an earthing reactor or an earthing transformer.

5. An offshore wind farm according to claim 4, wherein the earthing reactor or earthing transformer is combined with the array transformer.

6. An offshore wind farm according to any one of claims 4 or 5, wherein the earthing reactor is designed and rated to wholly or partially compensate the array cable.

7. An offshore wind farm according to any one of claims 4 to 6, wherein the earthing reactor or earthing transformer is placed on one of said wind turbine generators.

8. An offshore wind farm according to any one of the preceding claims, wherein the array transformer is arranged on a platform or support structure mounted on said wind turbine generator.

9. An offshore wind farm according to claim 8, wherein the platform or support structure is located on the outside of said wind turbine generator.

10. An offshore wind farm according to any one of the preceding claims wherein the offshore substation comprises a superstructure and a substructure, wherein the substructure comprises jacket or a monopile.

11. An offshore wind farm according to any one of the preceding claims, wherein the substructure comprises a three-leg jacket.

12. An offshore substation for a wind farm comprising at least one shunt reactor for compensation of at least one export cable, where the at least one shunt reactor is adapted for supplying electrical power for operating the offshore substation.

13. An offshore substation according to claim 12, wherein the offshore substation comprises a superstructure and a substructure, wherein the substructure comprises jacket or a monopile.

14. An offshore substation according to any one of claims 12 or 13, wherein the substructure comprises a three-leg jacket.
